# EUROPEAN PATENT SPECIFICATION

(11) **EP 3 500 017 B1**
(45) Date of publication and mention of the grant of the patent: **08.11.2023**
(21) Application number: 17839540.6
(22) Date of filing: 09.08.2017
(51) Int. Cl.: H04L 1/1607, H04L 1/1829, H04L 5/00

(54) **USER EQUIPMENT AND COMMUNICATION METHOD**
BENUTZERGERÄT UND KOMMUNIKATIONSVERFAHREN
ÉQUIPEMENT D'UTILISATEUR ET PROCÉDÉ DE COMMUNICATION

(30) Priority: 10.08.2016 JP 2016158264
(43) Date of publication of application: 19.06.2019
(73) Proprietor: NTT DOCOMO, INC., Chiyoda-ku Tokyo 100-6150 (JP)
(72) Inventor: YASUKAWA, Shinpei, Tokyo 100-6150 (JP); NAGATA, Satoshi, Tokyo 100-6150 (JP); TAKEDA, Kazuki, Tokyo 100-6150 (JP)
(74) Representative: Hoffmann Eitle
(86) International application number: PCT/JP2017/028962
(87) International publication number: WO 2018/030473

(56) References cited:
- WO-A1-2015/079971
- JP-A- 2012 516 616
- JP-A- 2013 526 088
- JP-A- 2016 506 138
- US-A1- 2012 113 942
- US-A1- 2013 034 073
- US-A1- 2015 055 532
- US-A1- 2016 021 653
- US-A1- 2016 182 202

## Description

### TECHNICAL FIELD

The present invention relates to a user equipment, a base station and a method executed by the user equipment in a radio communication system.

### BACKGROUND ART

Currently, in a 3^{rd} generation partnership project (3GPP), a next generation system, which corresponds to a successor of long term evolution (LTE)-advanced as one of fourth generation radio communication systems and is called 5G, has been examined. In the 5G, three use cases including an extended mobile broadband (eMBB), a massive machine type communication (mMTC), and an ultra reliability and low latency communication (URLLC) are mainly assumed.

The URLLC is aimed at realization of a radio communication with low latency and high reliability. In the URLLC, as a specific plan for realization of low latency, introduction of a short transmission time interval (TTI) length (also referred to as a subframe length, or a subframe interval), shortening of control latency from packet generation to data transmission, and the like have been examined. In addition, as a specific plan for realization of high reliability in the URLLC, introduction of a coding mode with a low coding rate and a modulation mode for realization of a low bit error rate, utilization of diversity, and the like have been examined.

In addition, in the URLLC, for example, realization of U-plane latency of 1 ms and a packet error rate of, for example, 10A-5 has been examined. So as to suppress an increase in an overhead and to realize the packet error rate of 10A-5, it is necessary to perform a retransmission control using a HARQ feedback. Furthermore, Non-Patent Document 1 is an example of the related art related to the HARQ feedback.
US 2013/034073 A1 relates to a communication method and system for PUCCH (physical uplink control channel) resource assignment.
US 2012/113942 A1 relates to an uplink transmission method of a terminal and an uplink reception method of a base station using shared radio resources which can reduce an uplink transmission delay.
US 2015/055532 A1 relates to controlling Discontinuous Reception (DRX) in the wireless device.
WO 2015/079971 A1 relates to a technology in which the terminal device performs communication through multiple cells referred to as cell aggregation or carrier aggregation.

### CITATION LIST

### NON-PATENT DOCUMENT

Non-Patent Document 1: 3GPP TS 36.321 V13.2.0 (2016-06)

### SUMMARY OF THE INVENTION

### PROBLEM TO BE SOLVED BY THE INVENTION

In a case of using the HARQ feedback as described above, when a reception error (erroneous recognition of NACK as ACK, and the like) of the HARQ feedback occurs on a base station side, latency occurs due to retransmission processing of a higher layer. Accordingly, it is necessary to raise reliability of the HARQ feedback and to reduce a reception error so as to realize low latency. Furthermore, the HARQ feedback is an example of uplink control information, and it is preferable to improve reliability of the uplink control information without limitation to the HARQ feedback so as to realize low latency.

The invention has been made in consideration of the above-described circumstances, and an object thereof is to provide a technology capable of improving reliability of uplink control information that is transmitted from a user equipment to a base station in a radio communication system including the base station and the user equipment.

### MEANS FOR SOLVING PROBLEM

The problem is solved by the subject-matter of the independent claims. Preferred embodiments are set out in the dependent claim.

### EFFECT OF THE INVENTION

According to the technology that is disclosed, it is possible to provide a technology capable of improving reliability of uplink control information that is transmitted from a user equipment to a base station in a radio communication system including the base station and the user equipment.

### BRIEF DESCRIPTION OF DRAWINGS

Fig. 1 is a configuration diagram of a radio communication system according to an embodiment of the invention;
Fig. 2A is a view illustrating Example 1 of a radio frame configuration in the embodiment of the invention;
Fig. 2B is a view illustrating Example 2 (b) of a radio frame configuration in the embodiment of the invention;
Fig. 3 is a view illustrating an allocation example of an HARQ feedback in the embodiment of the invention;
Fig. 4 is a view illustrating an allocation example of the HARQ feedback in the embodiment of the invention;
Fig. 5 is a view illustrating Variation 1 of allocation of the HARQ feedback;
Fig. 6 is a view illustrating Variation 2 of the allocation of the HARQ feedback;
Fig. 7 is a view illustrating Variation 3 of the allocation of the HARQ feedback;
Fig. 8 is a view illustrating an allocation example of UCI on a data resource;
Fig. 9A is a view illustrating Example 1 (a) of double transmission of UCI on a UL CCH and UCI on a UL data resource region;
Fig. 9B is a view illustrating Example 2 (b) of double transmission of UCI on a UL CCH and UCI on a UL data resource region;
Fig. 10A is a view illustrating Example 1 (a) in a case of transmitting the UCI on the UL CCH and the UCI on the UL data resource region in a combined state;
Fig. 10B is a view illustrating Example 2 (b) in a case of transmitting the UCI on the UL CCH and the UCI on the UL data resource region in a combined state;
Fig. 11 is a view illustrating an example of a functional configuration of a user equipment 10;
Fig. 12 is a view illustrating an example of a functional configuration of a base station 20; and
Fig. 13 is a view illustrating an example of a hardware configuration of the user equipment 10 and the base station 20.

### MODE(S) FOR CARRYING OUT THE INVENTION

Hereinafter, an embodiment (this embodiment) of the invention will be described with reference to the accompanying drawings. Furthermore, the following embodiment to be described below is illustrative only, and an embodiment to which the invention is applied is not limited to the following embodiment.

It is assumed that a radio communication system of this embodiment supports at least an LTE communication mode. Accordingly, an existing technology defined in the LTE can be appropriately used in an operation of the radio communication system. However, the existing technology is not limited to the LTE. In addition, it is assumed that "LTE" in this specification has broad meaning including LTE-Advanced, and a mode (for example, 5G) subsequent to the LTE-Advanced unless otherwise stated. In addition, the invention is also applicable to a communication mode other than the LTE.

In addition, in the following embodiment, as an example of uplink control information (UCI), a HARQ feedback (ACK/NACK and the like) is exemplified. However, the invention is applicable to the entirety of uplink control information without limitation to the HARQ feedback.

In addition, in the following description, a resource for DL data reception may be described as "DL data resource". This is also true of a resource for HARQ feedback transmission and a resource for UL data transmission.

### (Whole Configuration of System)

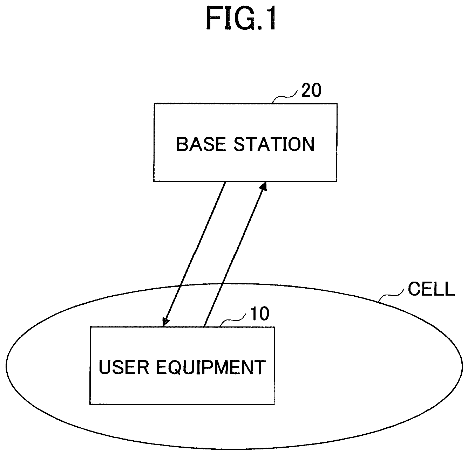

Fig. 1 is a configuration diagram of a radio communication system according to this embodiment. As illustrated in Fig. 1, the radio communication system according to this embodiment includes a user equipment 10 and a base station 20. In Fig. 1, the user equipment 10 and the base station 20 are illustrated one by one, but this is illustrative only. A plurality of the user equipments 10 and a plurality of the base stations 20 may be respectively provided.

### (With Respect to Radio Frame Configuration)

Description will be given of a radio frame that is used in the radio communication system according to this embodiment. Furthermore, a term of "radio frame" that is used in this specification and the appended claims represents a more general time unit instead of representing "radio frame" (10 msec) that is defined in current LTE.

Here, a configuration of a radio frame with a length of 1TTI will be described. The radio frame with the length of 1TTI may be referred to as a subframe. In addition, for example, a time length of 1TTI may be 1 ms, 0.5 ms, and a length other than 1 ms and 0.5 ms.

The radio frame according to this embodiment employs time division duplex (TDD) as a duplex mode, and has a configuration capable of flexibly switching UL and DL in 1TTI as a basic configuration. According to this, ultra-low latency is realized. Furthermore, TDD is used as an example. In this embodiment, it is possible to use FDD that uses a frequency band that is different between UL and DL.

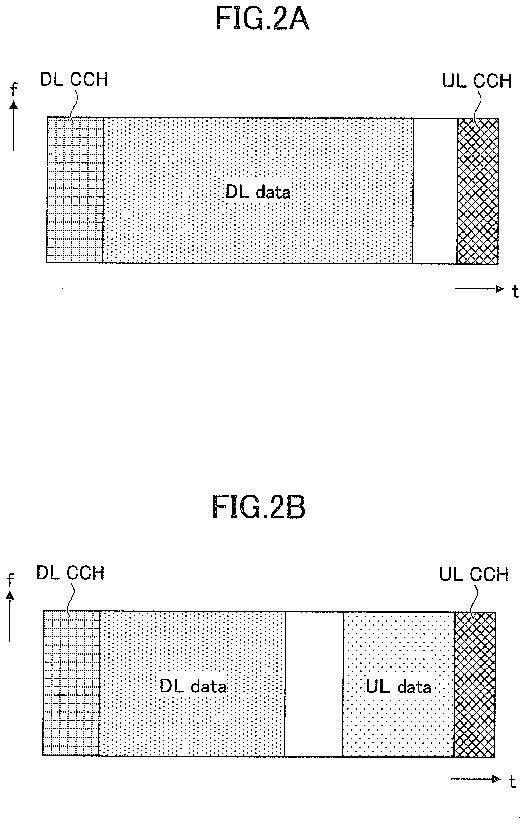

Figs. 2A and 2B illustrates an example of a radio frame configuration (or a radio frame structure) in this embodiment. Radio frames illustrated in Example 1 of Fig. 2A and Example 2 of Fig. 2B have a time length of 1TTI.

In Example 1 illustrated in Fig. 2A, a downlink control channel (DL CCH) and an uplink control channel (UP CCH) are configured, and a DL data resource region (a square region described as DL data in Fig. 2A) is configured between regions of the DL CCH and the UL CCH. Note that, a position between a trailing side in a time region of the DL data resource region and a leading side in the UL CCH is a gap for switching DL and UL to each other.

The user equipment 10 receives an allocation of the DL data resource in the DL data resource region in accordance with control information that is received from the base station 20 by using the DL CCH, and receives DL data by the DL data resource. In addition, the user equipment 10 transmits a HARQ feedback related to DL data reception to the base station 20 by using the UL CCH.

In Example 2 illustrated in Fig. 2B, the DL CCH and the UL CCH are configured, a DL data resource region (a square region described as UL data in Fig. 2B) and an UL data resource region (a square region described as DL data in Fig. 2B) are configured between regions of the DL CCH and the UL CCH. A gap between a trailing side of the DL data resource region and a leading side of the UL data resource region is a gap for switching DL and UL to each other.

For example, the user equipment 10 receives an allocation of the DL data resource in the DL data resource region, and receives an allocation of the UL data resource in the UL data resource region in accordance with control information that is received from the base station 20 by using the DL CCH. In addition, the user equipment 10 receives DL data by the DL data resource and transmits UL data by the UL data resource. In addition, the user equipment 10 transmits a HARQ feedback related to DL data reception to the base station 20 by using the UL CCH.

For example, a configuration of a radio frame as illustrated in Figs. 2A and 2B is set (configured) in a semi-static manner by higher layer signaling from the base station 20 to the user equipment 10. In addition, for example, it is possible to configure a UL/DL control channel in a semi-static manner by higher layer signaling, and it is possible to configure a UL/DL data resource region (may also be referred to as "data channel) in a dynamic manner (for example, for each TTI) in accordance with control information that is transmitted from the base station 20 to the user equipment 10 by using the DL CCH.

For example, on the basis of control information that is received by the DL CCH at any TTI, the user equipment 10 applies a configuration including only a DL data resource region as a data resource region as illustrated in Fig. 2A at the TTI, and on the basis of control information that is received by the DL CCH at the subsequent TTI, the user equipment 10 applies a configuration including a DL data resource region and a UL data resource region as illustrated in Fig. 2B at the subsequent TTI. In addition, for example, on the basis of control information that is received by the DL CCH at a TTI, it is also possible to set a configuration of a data resource region with the subsequent N×TTI (N is an integer of 1 or greater).

The configuration illustrated in Figs. 2A and 2B are illustrative only. For example, it is also possible to use a configuration in which the DL CCH is not present and the data resource region and the UL CCH are present. In addition, it is also possible to use a configuration in which the UL CCH is not present and the DL CCH and the data resource region are present. In addition, it is also possible to use a configuration in which the DL CCH and the UL CCH are not present and only the data resource region is present. In addition, it is also possible to use a configuration in which the data resource region is not present and only the control channel is present.

### (Basic Operation Example)

In this embodiment, it is assumed that when the base station 20 transmits control information for allocation (may also be referred to as "scheduling") of the DL data resource to the user equipment 10 by the DL CCH, resource allocation information for HARQ feedback transmission is also transmitted to the user equipment 10 by the DL CCH. In this manner, allocation of the DL data resource and allocation of the HARQ feedback resource are simultaneously performed through signaling that is performed once (that is, at 1TTI), and thus it is possible to realize signaling with high reliability in comparison to a case of respectively performing the signaling.

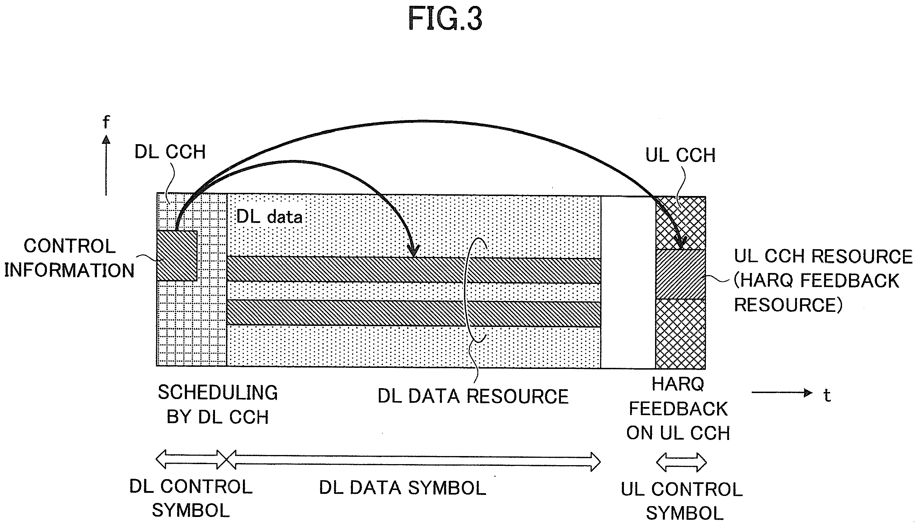

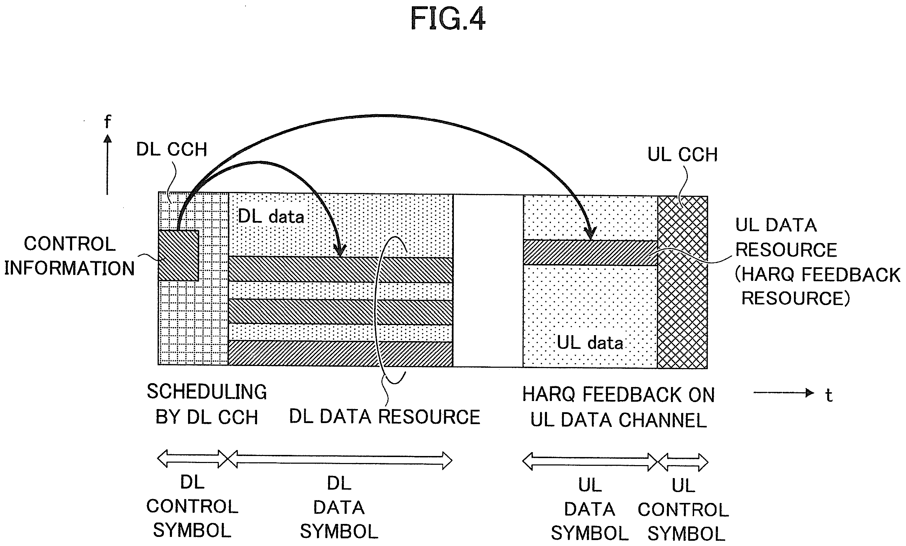

Description will be given of a basic operation example related to the resource allocation of the HARQ feedback in this embodiment with reference to Fig. 3 and Fig. 4. Note that, "symbol" in the drawings is "OFDM" symbol. However, using of the "OFDM" as a communication mode is illustrative only.

Fig. 3 illustrates a resource allocation example in the radio frame configuration illustrated in Fig. 2A. As illustrated in Fig. 3, the user equipment 10 receives control information, which includes resource allocation information for DL data reception, and resource allocation information of the UL CCH for HARQ feedback transmission, from the base station 20 by the DL CCH. In addition, the user equipment 10 receives DL data by the DL data resource that is allocated, and transmits the HARQ feedback related to reception of the DL data to the base station 20 by using the UL CCH that is allocated.

Fig. 4 illustrates a resource allocation example at 1TTI in the radio frame configuration illustrated in Fig. 2B. As illustrated in Fig. 4, the user equipment 10 receives control information, which includes resource allocation information for DL data reception, and allocation information of UL data resource for HARQ feedback transmission in the UL data resource region, from the base station 20 by the DL CCH. In addition, the user equipment 10 receives DL data by the DL data resource that is allocated, and transmits the HARQ feedback (ACK/NACK) related to reception of the DL data to the base station 20 by using the UL data resource that is allocated.

Note that, in the example illustrated in Fig. 4, the DL data resource that is allocated by the control information may be a resource that is designated for HARQ feedback transmission in the control information, or may be a resource for normal UL data transmission to which the designation is not given. In addition, the DL data resource that is allocated by the control information may be a resource that is allocated for only the HARQ feedback, a resource that is allocated for both the HARQ feedback and the normal UL data, or may be a resource that is allocated for only the normal UL data transmission. Even when the DL data resource is a resource that is allocated for the normal UL data transmission, for example, the user equipment 10 can transmit the HARQ feedback by using a free portion of the DL data resource.

In addition, the examples illustrated in Fig. 3 and Fig. 4 illustrate DL control information reception, Dl data reception and the HARQ feedback transmission with respect to the DL data reception in the same TTI, but the HARQ feedback with respect to the DL data reception at any TTI may be transmitted at another TTI. That is, for example, it is possible to allocate the HARQ feedback resource at another TTI by control information of TTI as illustrated in Fig. 3 and Fig. 4.

In this embodiment, as illustrated in Fig. 4, the user equipment 10 performs HARQ feedback transmission by using the UL data resource. Accordingly, it is possible to perform transmission by using relatively many symbols, and reliability of the HARQ feedback is further improved in comparison to a case of transmitting the HARQ feedback by using only the UL CCH.

In addition, as illustrated in Fig. 3 and Fig. 4, allocation of the DL data resource and the HARQ feedback resource is performed through signaling that is performed once, and thus reliability is further improved in comparison to a case of respectively performing the signaling. The reason for this is because it is necessary to accurately detect both of the signaling. Note that, a case of transmitting the control information by a plurality of resources in one DL CCH is also included in signaling that is performed once.

### (Variation of HARQ Feedback Resource Allocation Operation)

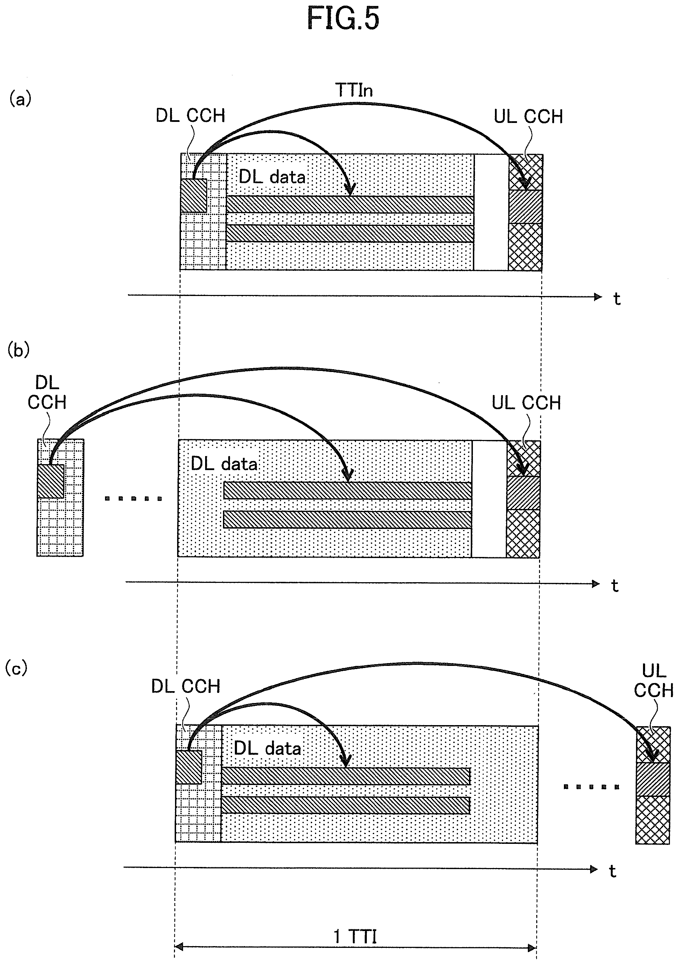

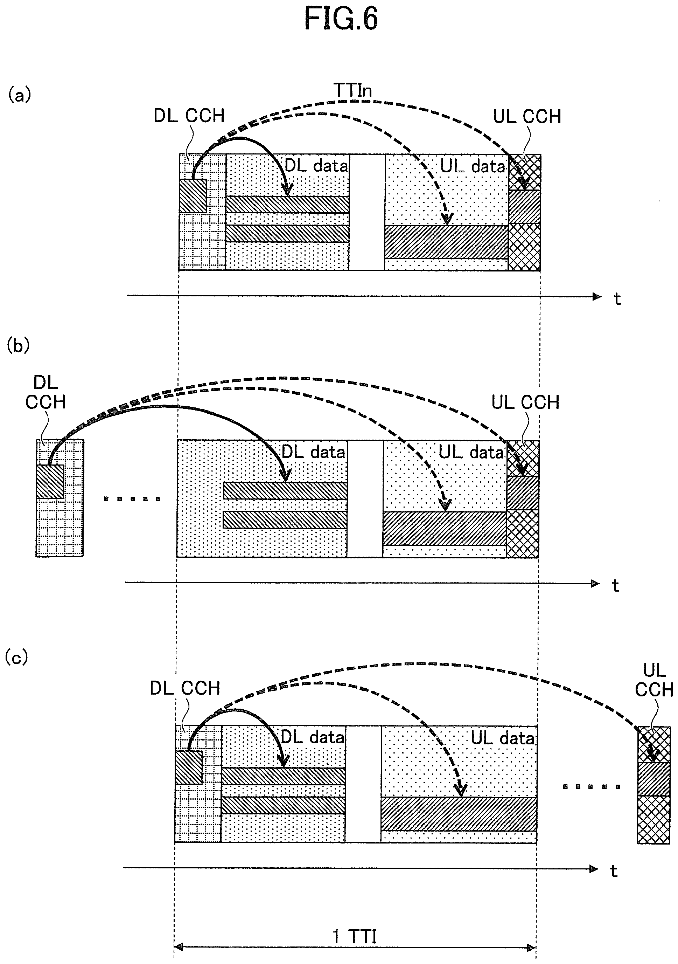

The HARQ feedback resource allocation method as illustrated in Fig. 3 and Fig. 4 is illustrative only, and various variations other than the method are present. Variation examples (Variations 1 and 2) are illustrated in Fig. 5 and Fig. 6.
(a) of Fig. 5 is illustrated for comparison with other configurations, and is similar to the allocation illustrated in Fig. 3. (b) of Fig. 5 is an example in which the DL CCH is not included in a radio frame at TTIn (n represents the number of TTI, and is an integer of 0 or greater). In this example, the user equipment 10 receives control information, which includes DL data resource allocation information of TTIn and HARQ feedback resource allocation information of TTIn, from the base station 20 by a DL CCH at TTIn-k (k is an integer of 1 or greater), and receives DL data and transmits a HARQ feedback at TTIn in accordance with allocation by the control information.
(c) of Fig. 5 is an example in which the UL CCH is not included in a radio frame at TTIn. In this example, the user equipment 10 receives control information, which includes DL data resource allocation information of TTIn and HARQ feedback resource allocation information of TTIn+k, from the base station 20 by a DL CCH at TTIn, and receives DL data at TTIn and transmits a HARQ feedback at TTIn+k in accordance with allocation by the control information.
(a) of Fig. 6 is illustrated for comparison with other configuration, and is basically the same as the allocation illustrated in Fig. 4. However, in (a) of Fig. 6, the HARQ feedback resource is allocated to the UL data resource region, and the HARQ feedback resource is also allocated to the UL CCH. Details of the double HARQ feedback transmission will be described later.
(b) of Fig. 6 is an example in which the DL CCH is not included in a radio frame at TTIn. In this example, the user equipment 10 receives control information, which includes DL data resource allocation information of TTIn and HARQ feedback resource allocation information (= UL data resource allocation information and UL CCH resource allocation information) of TTIn, from the base station 20 by a DL CCH at TTIn-k, and receives DL data and transmits the HARQ feedback at TTIn in accordance with allocation by the control information.
(c) of Fig. 6 is an example in which the UL CCH is not included in a radio frame at TTIn. In this example, the user equipment 10 receives control information, which includes DL data resource allocation information of TTIn, HARQ feedback resource allocation information (= UL data resource allocation information) of TTIn, and HARQ feedback resource allocation information (= UL CCH resource allocation information) of TTIn+k, from the base station 20 by a DL CCH at TTIn, and receives DL data at TTIn and transmits the HARQ feedback at TTIn and TTIn+k in accordance with allocation by the control information.

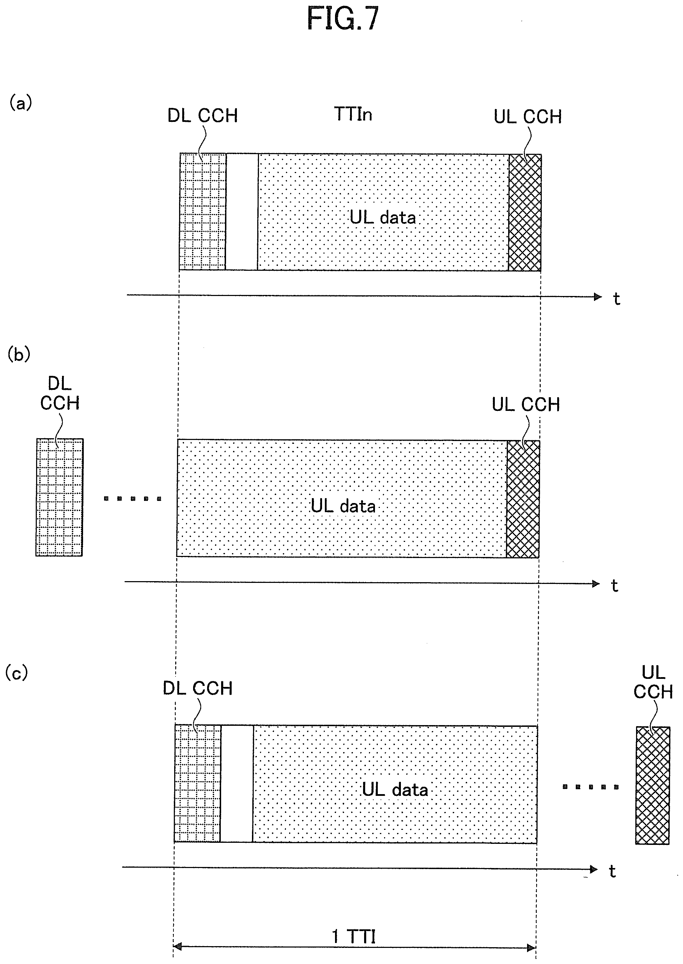

Fig. 7 illustrates a configuration example in which the DL data resource region is not provided at TTIn. In Figs. 7(a) to 7(c), DL data at TTIn is not received, and thus the HARQ feedback transmission with respect to the DL data is not present. However, in Figs. 7(a) to 7(c), the HARQ feedback with respect to DL data reception at TTIn-k may be transmitted by an UL data resource region at TTIn and/or an UL CCH at TTIn.

### (With Respect to Contents of Signaling Using DL CCH)

As described above, the user equipment 10 receives the control information, which includes the DL data resource allocation information and the like, from the base station 20 by the DL CCH. Hereinafter, a content example of the control information will be described in more detail.

As illustrated in Fig. 3, in a case where a UL data resource region is not included in a radio frame at a TTI, the control information includes DL data resource allocation information (may also be referred to as scheduling information), and HARQ feedback resource allocation information at the UL CCH.

The HARQ feedback resource allocation information at the UL CCH includes information (for example, any one of a combination of a plurality of a position and a size of a time and frequency resource, a code, and a sequence) of a resource that is allocated for HARQ feedback transmission in the UL CCH. In addition, the HARQ feedback resource allocation information may include a symbol length (may be the number of symbols per unit time) and/or a subcarrier interval. For example, when a symbol length, which is longer than a symbol length that is used in another information transmission, is set for HARQ feedback transmission, it is possible to improve reliability of the HARQ feedback.

In addition, for example, the user equipment 10 may determine the HARQ feedback resource in the UL CCH in accordance with a DL data resource position so as to reduce a signaling overhead. In this case, information of the HARQ feedback resource may not be included in the control information that is transmitted by the DL CCH. In addition, the base station 20 may notify the user equipment 10 of indexes of a plurality of resource candidates in the UL CCH in advance through higher layer signaling, and an index of a resource that is allocated to the user equipment 10 may be notified by the DL CCH. In addition, an offset value from a reference resource that is a resource (for example, one or a plurality of resource elements), which is designated by an index, set as the reference resource may be notified in addition to the index. In this case, for example, the user equipment 10 transmits the HARQ feedback by using a resource at a position spaced away from a position of a resource corresponding to the index by the offset value.

As illustrated in Fig. 4, in a case where a radio frame of a TTI includes an UL data resource region, the control information includes DL data resource allocation information, and HARQ feedback resource allocation information at the UL data resource region. In addition, in addition to the UL data resource region, in a case of transmitting the HARQ feedback by also using the UL CCH, the HARQ feedback resource allocation information in the above-described UL CCH is also included.

The HARQ feedback resource allocation information in the UL data resource region includes MCS, and resource information (for example, any one or any combination of a position and a size of a time and frequency resource, a code, and a sequence).

In addition, the base station 20 may notify the user equipment 10 of MCS for HARQ feedback transmission, the resource information, and the like in advance by higher layer signaling so as to reduce a signaling overhead. In this case, it is not necessary for the control information transmitted by the DL CCH to include the MCS and the resource information for HARQ feedback transmission, and for example, information indicating presence or absence of the HARQ feedback is included in the control information. Note that, the information indicating presence or absence may be information indicating availability of transmission. In addition, information indicating presence or absence of the HARQ feedback may not be included in the control information, and allocation information of the DL data resource may be regarded as presence information of the HARQ feedback.

In addition, in the same manner as in a case of the UL CCH, the base station 20 may notify the user equipment 10 of indexes of a plurality of resource candidates in the UL data resource region in advance through higher layer signaling, and an index of a resource that is allocated to the user equipment 10 may be notified by DL CCH. In addition, an offset value from a reference resource that is a resource, which is designated by an index, set as the reference resource may be notified in addition to the index.

In addition, a symbol length (may be the number of symbols per unit time) and/or a subcarrier interval may be included in the resource allocation information in the UL data resource region. For example, when scheduling the URLLC, if the symbol length of only UL is set to be long, it is possible to secure coverage.

In addition, control information that is transmitted by a DL CCH at a TTI may include an UL/DL configuration (TTI configuration) of the TTI. The TTI configuration that is notified with the control information is specific to a user equipment that receives the control information (UE specific). However, the TTI configuration that is notified with the control information may be common between user equipments in a cell (cell specific).

Information of the TTI configuration may be explicitly included in the control information, or may be implicitly included as to be described below.

As an example, the base station 20 notifies the user equipment 10 of a plurality of TTI configurations through higher layer signaling. Then, for example, when detecting that allocation information of the HARQ feedback resource that uses the UL data resource region is present in the control information that is received from the base station 20, the user equipment 10 applies a TTI configuration A (for example, a configuration in Fig. 4) among a plurality of TTI configurations which are configured through higher layer signaling. When detecting that allocation information of the HARQ feedback resource that uses the UL data resource region is not present and allocation information of the HARQ feedback resource that uses the UL CCH is present, the user equipment 10 applies a TTI configuration B (for example, a configuration in Fig. 3) among the plurality of TTI configurations which are configured through the higher layer signaling.

In addition, the control information that is transmitted by the DL CCH may include all of or a part of an UL control format, a modulation scheme and a coding rate (may be an offset with respect to a reference value) of the HARQ feedback that is transmitted in the UL data resource region, and a transmission power parameter. According to this, for example, reliability of ACK/NACK is changed by a packet type (for example, eMBB or URLLC) that is an object to be DL scheduled, and it is possible to enhance reliability of only ACK/NACK of a high-emergency packet.

The control information that is transmitted by the DL CCH may include all of pieces of information described above, or may include a part of the pieces of information as long as inconsistency does not occur.

### (With Respect to Mapping Method of HARQ feedback in UL Data Resource)

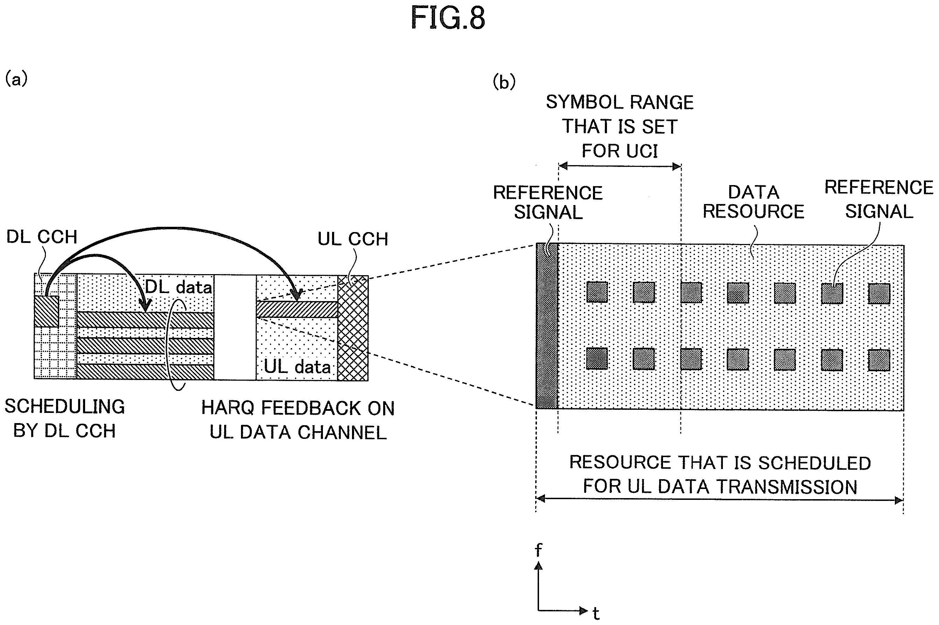

Fig. 8 is a view illustrating a detailed example of mapping of the HARQ feedback in a case of transmitting the HARQ feedback in the UL data resource region.

As is the case with Fig. 4, Fig. 8(a) represents a case of transmitting the HARQ feedback with respect to DL data in the UL data resource region. Fig. 8(b) represents a configuration example of the UL data resource, which is allocated by the control information that is received by the DL CCH, in the UL data resource region.

In the example illustrated in Fig. 8(b), a reference signal is disposed over the entirety of a frequency width of the UL data resource at a leading portion of the UL data resource in a time region. In addition, a reference signal is disposed in the UL data resource in a dispersed manner.

In this embodiment, the HARQ feedback is mapped to the vicinity of a leading symbol in the UL data resource and the vicinity of a reference signal. By mapping the HARQ feedback to the vicinity of the leading symbol in the UL data resource, it is possible to rapidly transmit the HARQ feedback to the base station 20. According to this, the base station 20 can detect the HARQ feedback at a high speed, and can perform retransmission, for example, at the subsequent TTI. In addition, by mapping the HARQ feedback to the vicinity of the reference signal, high channel estimation accuracy with respect to a resource of the HARQ feedback is realized in the base station 20, and reliability of demodulation and decoding of the HARQ feedback is improved.

More specifically, in the example illustrated in Fig. 8(b), the HARQ feedback is mapped to a region of a predetermined symbol range from a symbol subsequent to a symbol to which the reference signal at the leading portion is mapped in the UL data resource. Note that, the HARQ feedback may be mapped to the entirety of the region, or a part of the region.

In addition, in the example illustrated in Fig 8(b), the HARQ feedback is mapped to the entirety (excluding a portion of the reference signal) of a frequency width of the UL data resource. However, this is illustrative only, and a length of a resource, to which the HARQ feedback is mapped, in a frequency direction may be shorter than a length of the UL data resource in the frequency direction. In addition, in a time region, a gap may be present between the reference signal in the leading portion of the UL data resource, and the HARQ feedback.

In addition, it is also possible to employ a configuration in which the reference signal is not mapped to the leading portion in the UL data resource. In this case, for example, the HARQ feedback is mapped into a region of a predetermined symbol range from the leading symbol of the UL data resource that is allocated.

Note that, in Fig. 8(b), in a resource other than a resource, to which the HARQ feedback is mapped, in the UL data resource, UL data other than the HARQ feedback may be mapped, or UL data other than the HARQ feedback may not be mapped.

A symbol range of mapping the above-described HARQ feedback may be determined by the user equipment 10, for example, in accordance with arrangement of UL data other than the HARQ feedback in the UL data resource that is allocated. As an example, a number, which is obtained by subtracting the number of symbols which are used in mapping of the UL data from the number of the entirety of symbols in the UL data resource (excluding the number of symbols of the leading reference signal), may be determined as the number of symbols in the symbol range to which the HARQ feedback can be mapped.

In addition, the symbol range may be designated from the base station 20 to the user equipment 10 with the control information, which is transmitted by the DL CCH, in a dynamic manner. In addition, the symbol range may be designated from the base station 20 to the user equipment 10 with higher layer signaling or a broadcast signal (system information). Furthermore, the symbol range may be a value that is configured to the user equipment 10 in advance. When the symbol range is configured in accordance with an instruction from the base station 20, it is possible to optimize the symbol range for the HARQ feedback in accordance with the capability of the base station 20.

Here, when determining that the HARQ feedback cannot be transmitted at a modulation scheme and a coding rate which are configured in a resource of the symbol range (for example, when determining that reliability is not maintained), the user equipment 10 may change the modulation scheme and the coding rate in the resource of the symbol range so that the HARQ feedback can be transmitted. In this case, the modulation scheme and the coding rate may be changed to a modulation scheme and a coding rate which are determined in advance for the HARQ feedback, or a modulation scheme and a coding rate which are calculated through computation using a computation method that is determined in advance.

### (Double Transmission of HARQ feedback by UL CCH and UL Data Resource Region)

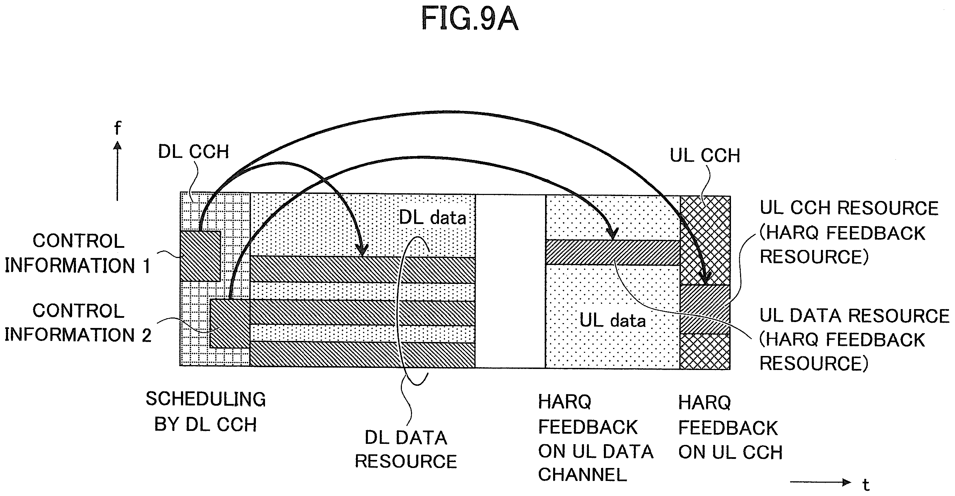

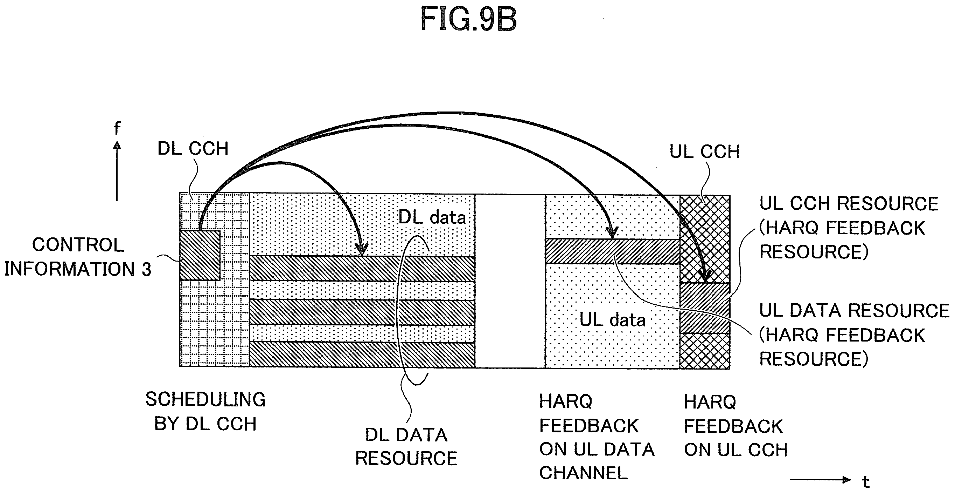

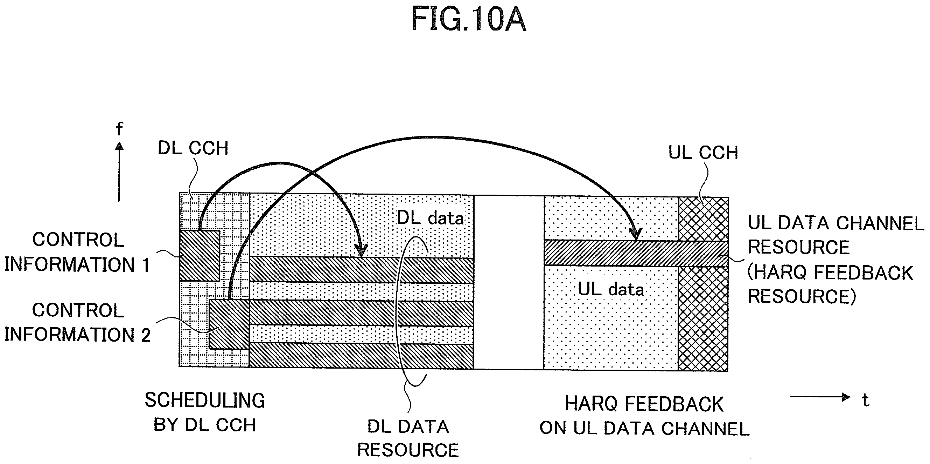

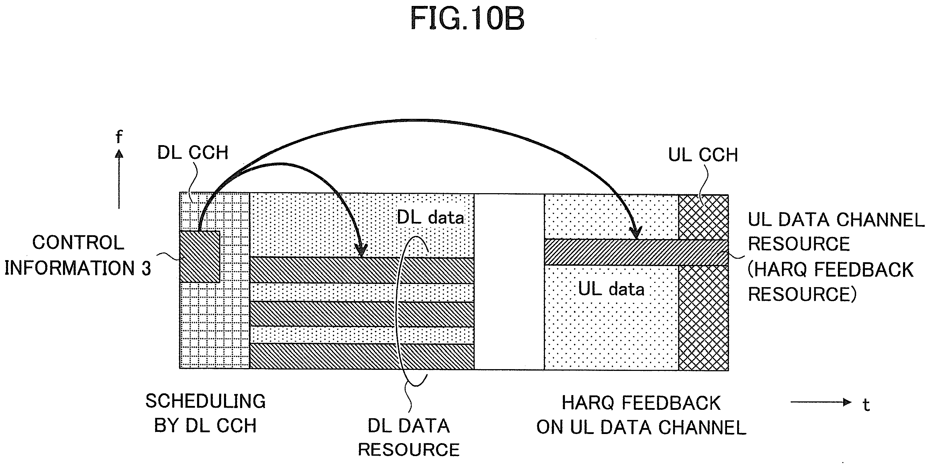

As described with reference to Fig. 6, the user equipment 10 can transmit the HARQ feedback by both the UL CCH and the UL data resource region at 1TTI. A specific operation example in a case of transmitting the HARQ feedback by both the UL CCH and the UL data resource region will be described below with reference to Figs. 9A and 9B, and Figs. 10A and 10B.

As illustrated in Fig. 9A, when the user equipment 10 is instructed to transmit the HARQ feedback by using the UL CCH at a TTI by Control Information 1 of the DL CCH, that is, in a case where UL data transmission is scheduled, that is, in a case where the UL data resource is allocated (In Fig. 9A, the UL data resource is allocated by Control Information 2), the user equipment 10 transmits the HARQ feedback by the UL CCH, and transmits the HARQ feedback by using the UL data resource. Note that, the HARQ feedback that is transmitted by the UL CCH and the HARQ feedback that is transmitted by the UL data resource may be the same information, or the HARQ feedback that is transmitted by the UL CCH and the HARQ feedback that is transmitted by the UL data resource may be collectively set as one HARQ feedback.

In addition, an operation illustrated in Fig. 9B may be performed. In this case, the DL data resource, the UL data resource, the HARQ feedback resource of the UL CCH may be allocated by Control Information 3. Even in this case, as is the case with the above-described operation, when the user equipment 10 is instructed to transmit the HARQ feedback by using the UL CCH (instruction by Control Information 3), in a case where the UL data resource is allocated (allocation by Control Information 3), the user equipment 10 transmits the HARQ feedback by the UL CCH, and transmits the HARQ feedback by using the UL data resource.

In addition, in any case of Figs. 9A and 9B, when the HARQ feedback resource is allocated to the UL data resource region, even in a case where a transmission instruction of the HARQ feedback in the UL CCH is not give, the user equipment 10 may transmit the HARQ feedback by the UL data resource region, and may transmit the HARQ feedback by the UL CCH, instead of the above-described operation.

The symbol (time resource) of the UL CCH may not be dynamically changed for protection against interference. In this case, a symbol section of the UL CCH is present regardless of presence or absence of transmission of the HARQ feedback. Accordingly, an increase in an overhead due to the double transmission is not problematic, and it is possible to improve reliability of the HARQ feedback due to the double transmission.

In addition, as illustrated in Figs. 10A and 10B, the UL data resource and the UL CCH resource may be combined to each other, and the HARQ feedback may be transmitted by regarding the entirety of the resources which are combined as the UL data resource or the UL CCH resource. In this case, it is possible to code the HARQ feedback by using all UL symbols, and thus transmission with a low coding rate is realized.

For example, an instruction of whether the HARQ feedback is to be transmitted by the UL data resource and the UL CCH resource separately, as illustrated in Figs. 9A and 9B, or whether the HARQ feedback is to be transmitted in a combination state as illustrated in Figs. 10A and 10B may be given to the user equipment 10 by the base station 20 in the control information (for example, control information for performing UL data resource allocation) of the DL CCH at a corresponding TTI. In addition, the instruction may be given from the base station 20 to the user equipment 10 through higher layer signaling.

In addition, a notification (configuration) of whether or not the double transmission operation of the HARQ feedback by using both the UL data resource and the UL CCH resource as illustrated with reference to Figs. 9A and 9B and Figs. 10A and 10B is to be performed may be given from the base station 20 to the user equipment 10 through higher layer signaling.

In a case where configuration of performing the double transmission operation is not set to the user equipment 10, for example, the user equipment 10 transmits the HARQ feedback on only one side between the UL data resource region and the UL CCH. In this case, the HARQ feedback may be always transmitted by the UL CCH. In a case where allocation of the UL data resource is present, the HARQ feedback may be transmitted by the UL data resource. In the former case, it is possible to avoid an increase in an overhead of the UL data channel and it is possible to avoid an effect on an UL throughput. In the latter case, it is possible to detect the HARQ feedback at the base station 20 at an early time, and retransmission latency may decrease.

In addition, in a case where the user equipment 10 is instructed to perform the double transmission by the control information that is received by the DL CCH, the user equipment 10 may perform the double transmission regardless of presence or absence of configuration in higher layer of the double transmission operation.

### (Device Configuration)

Description will be given of a functional configuration example of the user equipment 10 and the base station 20 which execute the operation of the embodiment as described above.

### <User Equipment>

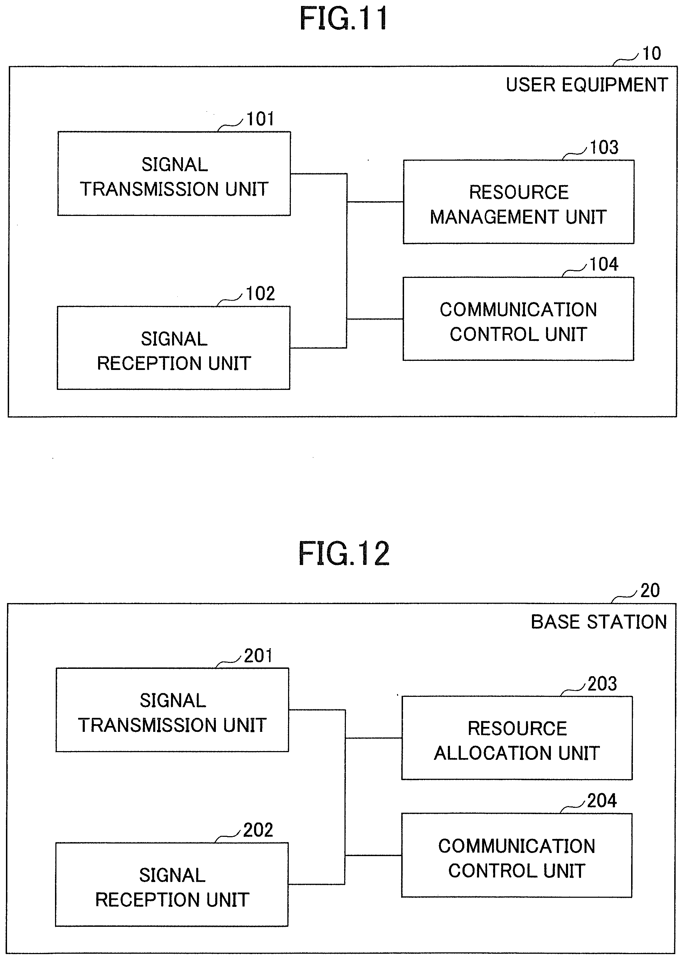

Fig. 11 is a view illustrating an example of a functional configuration of the user equipment 10 according to the embodiment. As illustrated in Fig. 11, the user equipment 10 includes a signal transmission unit 101, a signal reception unit 102, a resource management unit 103, and a communication control unit 104. The functional configuration illustrated in Fig. 11 is illustrative only. A functional classification or the name of the functional units may be arbitrarily set as long as the operation according to the embodiment can be executed.

The signal transmission unit 101 creates a transmission signal, and wirelessly transmits the signal. The signal reception unit 102 includes a function of wirelessly receiving various signals and acquiring a signal of a further higher layer from a signal of a physical layer which is received.

The resource management unit 103 retains resource information included in control information that is received from the base station 20 by the signal reception unit 102, resource information that is instructed through higher layer signaling, resource information that is set in advance, resource information that is determined by the user equipment 10, various pieces of configuration information, and the like.

The signal transmission unit 101 performs the transmission operation of the HARQ feedback and the like as described above on the basis of the information that is retained in the resource management unit 103. In addition, the signal reception unit 102 performs reception of control information, reception of higher layer signaling, reception of a broadcast signal, reception of DL data, and the like on the basis of the information that is retained in the resource management unit 103. Furthermore, "resource information" may include information related to a radio frame configuration.

For example, the communication control unit 104 executes a control operation of determining whether or not the user equipment 10 performs the double transmission, and the like.

### <Base Station 20>

Fig. 12 is a view illustrating an example of a functional configuration of the base station 20 according to this embodiment. As illustrated in Fig. 12, the base station 20 includes a signal transmission unit 201, a signal reception unit 202, a resource allocation unit 203, and a communication control unit 204. The functional configuration illustrated in Fig. 19 is illustrative only. A functional classification or the name of the functional units may be arbitrarily set as long as the operation according to the embodiment can be executed.

The signal transmission unit 201 includes a function of generating a signal to be transmitted to a user equipment 10 side, and wirelessly transmitting the signal. The signal reception unit 202 includes a function of receiving various signals which are transmitted from the user equipment 10, and acquiring information of, for example, a further higher layer from the signal that is received. In addition, the signal reception unit 202 receives the HARQ feedback that is transmitted from the user equipment 10, and performs retransmission of data as necessary.

The resource allocation unit 203 performs creation of control information that is transmitted by the DL CCH, and the like. The information that is created is transmitted from the signal transmission unit 201. For example, the communication control unit 204 performs creation of configuration information that is transmitted through higher layer signaling, creation of configuration information that is transmitted by a broadcast signal, and the like. The information that is created is transmitted from the signal transmission unit 201.

### <Hardware Configuration>

The block diagrams (Fig. 11 and Fig. 12) which are used in description of the embodiment illustrate blocks of a function unit. The function blocks (constituent units) are realized by an arbitrary combination of hardware and/or software. In addition, means for realizing respective function blocks is not particularly limited. That is, the respectively function block may be realized by one device in which a plurality of elements are physically and/or logically combined. In addition, two or greater devices, which are physically and/or logically separated from each other, may be directly and/or indirectly (for example, wire and/or wirelessly) connected, the respective function blocks may be realized by a plurality of the devices.

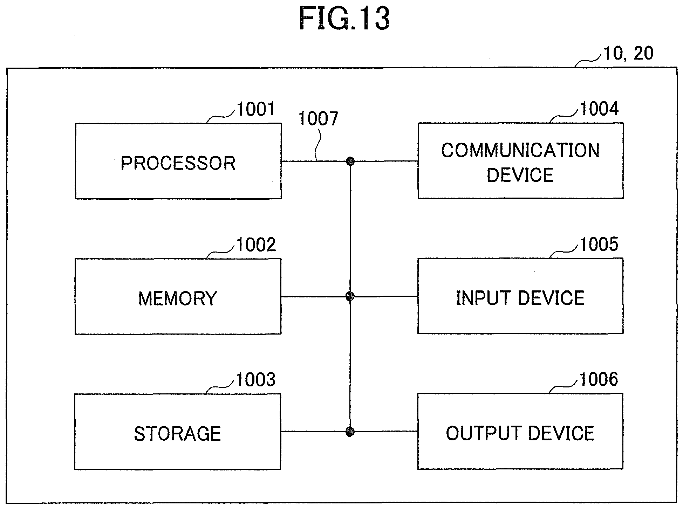

For example, the user equipment 10 and the base station 20 in the embodiment of the invention may function as a computer that performs processing according to the embodiment. Fig. 13 is a view illustrating an example of a hardware configuration of the user equipment 10 and the base station 20 according to this embodiment. The user equipment 10 and the base station 20 may be configured as a computer device that physically includes a processor 1001, a memory 1002, a storage 1003, a communication device 1004, an input device 1005, an output device 1006, a bus 1007, and the like.

Furthermore, in the following description, a term "device" may be substituted with a circuit, a device, a unit, and the like. The hardware configuration of the user equipment 10 and the base station 20 may include the respective devices, which are indicated by reference numerals 1001 to 1006 in the drawing, one by one or in a plural number, or may not include a part of the devices.

Respective functions in the user equipment 10 and the base station 20 are realized by reading out predetermined software (program) from hardware such as the processor 1001 and the memory 1002 so as to allow the processor 1001 to perform an arithmetic operation, and by controlling a communication by the communication device 1004, and reading-out and/or input of data in the memory 1002 and the storage 1003.

For example, the processor 1001 allows an operating system to operate so as to control the entirety of the computer. The processor 1001 may be constituted by a central processing unit that includes an interface with a peripheral device, a control device, an arithmetic operation device, a register, and the like.

In addition, the processor 1001 reads out a program (program code), a software module, or data from the storage 1003 and/or the communication device 1004 into the memory 1002, and performs various kinds of processing according to the program, the software, or the data. As the program, a program, which allows the computer to execute at least a part of the operations described in the embodiment, is used. For example, the signal transmission unit 101, the signal reception unit 102, the resource management unit 103, and the communication control unit 104 of the user equipment 10 may be realized by a control program that is stored in the memory 1002 and is operated by the processor 1001. In addition, the signal transmission unit 201, the signal reception unit 202, the resource allocation unit 203, and the communication control unit 204 of the base station 20 may be realized by a control program that is stored in the memory 1002 and is operated by the processor 1001. The above-described various kinds of processing are described to be executed by one processor 1001, but may be simultaneously or sequentially executed by two or greater processors 1001. The processor 1001 may be mounted by one or greater chips. Furthermore, the program may be transmitted from a network through electric communication line.

The memory 1002 is a computer-readable recording medium, and may be constituted by, for example, at least one of a read only memory (ROM), an erasable programmable ROM (EPROM), an electrically erasable programmable ROM (EEPROM), a random access memory (RAM), and the like. The memory 1002 may be referred to as a register, a cache, a main memory (main storage device), and the like. The memory 1002 can retain a program (program code), a software module, and the like which can be executed to carry out processing the embodiment of the invention.

The storage 1003 is a computer-readable recording medium, and may be constituted by at least one, for example, among an optical disc such as a compact disc ROM (CD-ROM), a hard disk drive, a flexible disk, a magneto-optical disc (for example, a compact disc, a digital multi-purpose disc, and a Blue-ray (registered trademark) disc), a smart card, a flash memory (for example, a card, a stick, a key drive), a floppy (registered trademark) disk, a magnetic strip, and the like. The storage 1003 may be referred to as an auxiliary storage device. For example, the above-described storage medium may be database including the memory 1002 and/or the storage 1003, a server, and other appropriate media.

The communication device 1004 is hardware (transmission and reception device) that performs a communication between computers through wire and/or radio network, and may be referred to as, for example, a network device, a network controller, a network card, a communication module, and the like. For example, the signal transmission unit 101 and the signal reception unit 102 of the user equipment 10 may be realized by the communication device 1004. In addition, the signal transmission unit 201 and the signal reception unit 202 of the base station 20 may be realized by the communication device 1004.

The input device 1005 is an input device (for example, a keyboard, a mouse, a microphone, a switch, a button, a sensor, and the like) that receives an input from the outside. The output device 1006 is an output device (for example, a display, a speaker, an LED lamp, and the like) that performs output to the outside. Furthermore, the input device 1005 and the output device 1006 may have an integral configuration (for example, a touch panel).

In addition, respective devices including the processor 1001, the memory 1002, and the like are connected to each other through a bus 1007 for an information communication. The bus 1007 may be configured as a single bus, or may be configured as a bus that is different between devices.

In addition, the user equipment 10 and the base station 20 may include hardware such as a microprocessor, a digital signal processor (DSP), an application specific integrated circuit (ASIC), a programmable logic device (PLD), and a field programmable gate array (FPGA), or a part or the entirety of respective function blocks may be realized by the hardware. For example, the processor 1001 may be mounted by least one piece of hardware.

### (Summary of Embodiment)

As described above, according to the embodiment, there is provided a user equipment in a radio communication system including a base station and the user equipment. The user equipment includes: a reception unit that receives control information, which includes allocation information of a resource for downlink data reception, and allocation information of a resource for uplink control information transmission, from the base station by a downlink control channel; and a transmission unit that transmits the uplink control information to the base station on the basis of the control information that is received by the reception unit.

According to the above-described configuration, in the radio communication system including the base station and the user equipment, it is possible to improve reliability of the uplink control information that is transmitted from the user equipment to the base station.

The control information, which is received by the reception unit, may include information that designates a radio frame configuration that is applied to the user equipment. According to this configuration, it is possible to change the radio frame configuration in a dynamic manner in correspondence with a situation in which data transmitted and received by the user equipment occurs, and it is possible to realize a low-latency communication.

The resource for uplink control information transmission may be a resource for uplink data transmission in a resource region for uplink data transmission which is set in a radio frame with a predetermined time length. According to this configuration, the uplink control information can be transmitted by using relatively many symbols in the resource for uplink data transmission, and thus the base station can accurately receive the uplink control information.

The transmission unit transmits the uplink control information by using both the resource for uplink data transmission and a resource of an uplink control channel. According to this configuration, for example, the uplink control information can be transmitted by using both of a symbol in the resource for uplink data transmission and a symbol of the resource of the uplink control channel, and thus the base station can more accurately receive the uplink control information.

### (Supplement of Embodiment)

Information notification may be performed other methods without limitation to the aspect and the embodiment which are described in this specification. For example, the information notification may be executed by physical layer signaling (for example, downlink control information (DCI) and uplink control information (UCI)), higher layer signaling (for example, RRC signaling, MAC signaling, broadcast information (master information block (MIB), system information block (SIB))), other signals, or a combination thereof. In addition, the RRC message may be referred to as RRC signaling. In addition, for example, the RRC message may be an RRC connection setup message, an RRC connection reconfiguration message, and the like.

The aspect and the embodiment which are described in this specification may also be applied to long term evolution (LTE), LTE-Advanced (LTE-A), SUPER 3G, IMT-Advanced, 4G, 5G, future radio access (FRA), W-CDMA (registered trademark), GSM(registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), other systems which use a suitable system, and/or a next generation system that is extended on the basis of the systems.

Information, which is input or output, may be stored in a specific location (for example, a memory), or may be managed by a management table. The information that is input or output, and the like may be subjected to rewriting, updating, or additional writing. The information, which is output, and the like may be deleted. The information, which is input, and the like may be transmitted to other devices.

Decision or determination may be performed by a value (0 or 1) that is expressed by one bit, may be performed in accordance with Boolean (true or false), or may be performed through numerical value comparison (for example, comparison with a predetermined value).

The information, the signals, and the like, which are described in this specification, may be expressed by using any one of other various technologies. For example, data, information, a signal, a bit, a symbol, and the like, which are stated over the entirety of the above description, may be expressed by a voltage, a current, an electromagnetic wave, a magnetic field or a magnetic particle, a photo field or a photon, or an arbitrary combination thereof.

Furthermore, terms described in this specification and/or terms necessary for understanding of this specification may be substituted with terms having the same or similar meaning. For example, the channel and/or the symbol may be a signal. In addition, the signal may be a message.

The user equipment may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several other suitable terms by those skilled in the art.

In the procedure, the sequence, and the like in the aspect and the embodiment which are described in this specification, the order thereof may be changed as long as inconsistency does not occur. For example, with regard to the method that is described in this specification, elements of various steps are suggested in an exemplary order, and there is no limitation to the specific order that is suggested.

The aspect and the embodiment which are described in this specification may be used alone or in combination thereof, or may be switched and used in accordance with execution. In addition, notification of predetermined information (for example, notification of "a fact of X") is not limited to the explicit notification, and may be performed in an implicit manner (for example, notification of the predetermined information is not performed).

The term "determining" that is used in this specification may include various operations. For example, the term "determining" may include regarding of calculating, computing, processing, deriving, investigating, looking up (for example, looking up in a table, a database, or other data structures), or ascertaining as "determined", and the like. In addition, the "determining" may include regarding of receiving (for example, information receiving), transmitting (for example, information transmitting), input, output, or accessing (for example, accessing to data in a memory) as "determined", and the like. In addition, "determining" may include regarding of resolving, selecting, choosing, establishing, comparing, or the like as "determining". That is, "determining" includes regarding of any operation as "determined".

Description of "on the basis of" in this specification does not represent "only on the basis of" unless otherwise stated. In other words, description of "on the basis of" represents both "only on the basis of" and "at least on the basis of".

The radio frame may be constituted by one or a plurality of frames in a time region. The one or the plurality of frames in the time region may be referred to as a subframe. In addition, the subframe may be constituted by one or a plurality of slots in the time region. In addition, the slot may be constituted by one or a plurality of symbols (OFDM symbol, SC-FDMA symbol, and the like) in the time region.

The each of the radio frame, the subframe, the slot, and the symbol represent a time unit when transmitting a signal. The radio frame, the subframe, the slot, and the symbol may be separate names corresponding to thereto.

For example, in an LTE system, the base station performs scheduling of allocating a radio resource (a frequency bandwidth capable of being used in each mobile station, transmission power, and the like) to the mobile station. A minimum time unit of the scheduling may be referred to as a transmission time interval (TTI).

For example, one subframe may be referred to as the TTI, a plurality of continuous subframes may be referred to as the TTI, or one slot may be referred to as the TTI. In addition, other time units may be referred to as the TTI.

The resource block (RB) is a resource allocation unit of the time region and the frequency region, and may include one or a plurality of continuous sub-carriers. In addition, the time region of the resource block may include one or a plurality of symbols, and may have a length of one slot, one subframe, or 1TTI. The 1TTI and the one subframe may be respectively constructed by one or a plurality of resource blocks. The above-described radio frame structure is illustrative only, and the number of subframes included in the radio frame, the number of slots included in a subframe, the number of symbols and resource blocks which are included in a slot, and the number of sub-carriers included in a resource block may be changed in various manners.

Hereinbefore, the invention has been described in detail, but it is apparent that the invention is not limited to the above-described embodiment in this specification. The invention can be executed a variation aspect and a modification aspect without departing from the scope of the invention which is determined by description of the appended claims. Accordingly, description in this specification is made for exemplary explanation, and does not have any limiting meaning with respect to the invention.

## Claims

1. A user equipment (10) comprising:
a reception unit (102) configured to receive control information, which includes allocation information of a resource for receiving downlink data, information indicating a transmission time position of a HARQ feedback for the downlink data, and information indicating a frequency position of the HARQ feedback, from a base station (20) by a downlink control channel; and
a transmission unit (101) configured to transmit the HARQ feedback at the transmission time position and the frequency position based on the information indicating the transmission time position and the information indicating the frequency position that are received by the reception unit.

2. The user equipment (10) as claimed in claim 1, wherein the information indicating the transmission time position includes k which is a number of slots, and
wherein the reception unit is configured to receive the downlink data in slot n, and the transmission unit is configured to transmit the HARQ feedback for the downlink data in slot n+k according to the information indicating the transmission time position.

3. A base station (20) comprising:
a transmission unit (201) configured to transmit control information, which includes allocation information of a resource for receiving downlink data, information indicating a transmission time position of a HARQ feedback for the downlink data, and information indicating a frequency position of the HARQ feedback, to a user equipment (10) by a downlink control channel; and
a reception unit (202) configured to receive the HARQ feedback transmitted by the user equipment at the transmission time position and the frequency position based on the information indicating the transmission time position and the information indicating the frequency position.

4. A communication method executed by a user equipment (10), the communication method comprising:
receiving control information, which includes allocation information of a resource for receiving downlink data, information indicating a transmission time position of a HARQ feedback for the downlink data, and information indicating a frequency position of the HARQ feedback, from a base station (20) by a downlink control channel; and
transmitting the HARQ feedback at the transmission time position and the frequency position based on the information indicating the transmission time position and the information indicating the frequency position.

## Patentansprüche

1. Benutzergerät (10), umfassend:
eine Empfangseinheit (102), die so konfiguriert ist, dass sie eine Steuerinformation, die eine Zuweisungsinformation einer Ressource zum Empfangen von Abwärtsverbindungsdaten, eine Information, die eine Übertragungszeitposition einer HARQ-Rückmeldung für die Abwärtsverbindungsdaten einschließt, und eine Information, die eine Frequenzposition der HARQ-Rückmeldung angibt, von einer Basisstation (20) über einen Abwärtsverbindungssteuerkanal empfängt; und
eine Übertragungseinheit (101), die so konfiguriert ist, dass sie die HARQ-Rückmeldung an der Übertragungszeitposition und der Frequenzposition basierend auf der Information, die die Übertragungszeitposition angibt, und der Information, die die Frequenzposition angibt, die von der Empfangseinheit empfangen werden, überträgt.

2. Benutzergerät (10) nach Anspruch 1, wobei die Information, die die Übertragungszeitposition angibt, k einschließt, wobei es sich um eine Anzahl von Schlitzen handelt, und
wobei die Empfangseinheit so konfiguriert ist, dass sie die Abwärtsverbindungsdaten im Schlitz n empfängt, und die Übertragungseinheit so konfiguriert ist, dass sie die HARQ-Rückmeldung für die Abwärtsverbindungsdaten im Schlitz n+k überträgt, entsprechend der Information, die die Übertragungszeitposition angibt.

3. Basisstation (20), umfassend:
eine Übertragungseinheit (201), die so konfiguriert ist, dass sie eine Steuerinformation, die eine Zuweisungsinformation einer Ressource zum Empfangen von Abwärtsverbindungsdaten, eine Information, die eine Übertragungszeitposition einer HARQ-Rückmeldung für die Abwärts-verbindungsdaten angibt, und eine Information, die eine Frequenzposition der HARQ-Rückmeldung angibt, einschließt, an ein Benutzergerät (10) über einen Abwärtsverbindungssteuerkanal überträgt; und
eine Empfangseinheit (202), die so konfiguriert ist, dass sie die von dem Benutzergerät übertragene HARQ-Rückmeldung an der Übertragungszeitposition und der Frequenzposition empfängt, basierend auf der Information, die die Übertragungszeitposition angibt, und der Information, die die Frequenzposition angibt.

4. Kommunikationsverfahren, das von einem Benutzergerät (10) ausgeführt wird, wobei das Kommunikationsverfahren umfasst:
Empfangen von einer Steuerinformation, die eine Zuweisungsinformation einer Ressource zum Empfangen von Abwärtsverbindungsdaten, eine Information, die eine Übertragungszeitposition einer HARQ-Rückmeldung für die Abwärtsverbindungsdaten angibt, und eine Information, die eine Frequenzposition der HARQ-Rückmeldung angibt, einschließt, von einer Basisstation (20) über einen Abwärtsverbindungssteuerkanal; und
Übertragen der HARQ-Rückmeldung an der Übertragungszeitposition und der Frequenzposition basierend auf der Information, die die Übertragungszeitposition anzeigt, und der Information, die die Frequenzposition anzeigt.

## Revendications

1. Équipement (10) d'utilisateur comprenant :
une unité (102) de réception configurée pour recevoir une information de commande, qui inclut une information d'allocation d'une ressource pour la réception de données de liaison descendante, une information indiquant une position temporelle d'émission d'un retour d'informations de requête de répétition automatique hybride, HARQ, pour les données de liaison descendante, et une information indiquant une position fréquentielle du retour d'informations d'HARQ, en provenance d'une station (20) de base par un canal de commande de liaison descendante ; et
une unité (101) d'émission configurée pour émettre le retour d'informations d'HARQ à la position temporelle d'émission et à la position fréquentielle sur la base de l'information indiquant la position temporelle d'émission et de l'information indiquant la position fréquentielle qui sont reçues par l'unité de réception.

2. Équipement (10) d'utilisateur selon la revendication 1, dans lequel l'information indiquant la position temporelle d'émission inclut k qui est un nombre de créneaux, et
dans lequel l'unité de réception est configurée pour recevoir les données de liaison descendante dans un créneau n, et l'unité d'émission est configurée pour émettre le retour d'informations d'HARQ pour les données de liaison descendante dans un créneau n+k selon l'information indiquant la position temporelle d'émission.

3. Station (20) de base comprenant :
une unité (201) d'émission configurée pour émettre une information de commande, qui inclut une information d'allocation d'une ressource pour la réception de données de liaison descendante, une information indiquant une position temporelle d'émission d'un retour d'informations de requête de répétition automatique hybride, HARQ, pour les données de liaison descendante, et une information indiquant une position fréquentielle du retour d'informations d'HARQ, vers un équipement (10) utilisateur par un canal de commande de liaison descendante ; et
une unité (202) de réception configurée pour recevoir le retour d'informations d'HARQ émis par l'équipement utilisateur à la position temporelle d'émission et à la position fréquentielle sur la base de l'information indiquant la position temporelle d'émission et de l'information indiquant la position fréquentielle.

4. Procédé de communication mis en oeuvre par un équipement (10) d'utilisateur, le procédé de communication comprenant :
la réception d'une information de commande, qui inclut une information d'allocation d'une ressource pour la réception de données de liaison descendante, une information indiquant une position temporelle d'émission d'un retour d'informations de requête de répétition automatique hybride, HARQ, pour les données de liaison descendante, et une information indiquant une position fréquentielle du retour d'informations d'HARQ, en provenance d'une station (20) de base par un canal de commande de liaison descendante ; et
l'émission du retour d'informations d'HARQ à la position temporelle d'émission et à la position fréquentielle sur la base de l'information indiquant la position temporelle d'émission et de l'information indiquant la position fréquentielle.
